Europäisches Patentamt

European Patent Office

Office européen des brevets

(19)

(11) **EP 0 844 589 A1**

(12) # DEMANDE DE BREVET EUROPEEN

(43) Date de publication:
**27.05.1998 Bulletin 1998/22**

(51) Int Cl.$^6$: **G06T 7/00**

(21) Numéro de dépôt: **97402731.0**

(22) Date de dépôt: **14.11.1997**

(84) Etats contractants désignés:
**AT BE CH DE DK ES FI FR GB GR IE IT LI LU MC NL PT SE**
Etats d'extension désignés:
**AL LT LV MK RO SI**

(30) Priorité: **22.11.1996 FR 9614311**

(71) Demandeur: **THOMSON-CSF**
**75008 Paris (FR)**

(72) Inventeur: **Tabourier, Rémy**
**94117 Arcueil Cedex (FR)**

(74) Mandataire: **Beylot, Jacques et al**
**THOMSON-CSF-S.C.P.I.,**
**13, Avenue du Président**
**Salvador Allende**
**94117 Arcueil Cédex (FR)**

(54) **Procédé de détermination de l'attitude et de la position d'un appareil de prise de vue à partir de l'image qu'il procure d'une zone cartographiée**

(57)  Le procédé consiste à munir l'image et la zone cartographiée de deux systèmes de coordonnées cartésiennes, à faire correspondre à ces systèmes de coordonnées cartésiennes des systèmes de coordonnées homogènes, à déterminer la matrice de passage d'un système de coordonnées homogènes à l'autre au moyen de quatre points caractéristiques de l'image dont on a repéré les points homologues dans la zone cartographiée, à utiliser cette matrice de passage pour exprimer dans les deux systèmes de coordonnées homogènes la direction de la trace du plan de l'image sur le plan de la zone cartographiée et en tirer l'angle de gîte $\Phi$ et l'angle de cap $\Psi$ de l'appareil de prise de vue, l'angle d'assiette $\Theta$ et la distance $\rho$ de l'appareil de prise de vue au point $\Omega$ de la zone cartographiée homologue du centre $\omega$ de l'image se déduisant de relations entre les distances entre des points particuliers de l'image et les distances de leurs points homologues dans la zone cartographiée.

FIG.1

EP 0 844 589 A1

**Description**

La présente invention concerne la détermination de l'attitude et de la position d'un appareil de prise de vue à partir de l'image qu'il procure d'une zone cartographiée. La déduction à partir d'une image d'une zone cartographiée de l'attitude et de la position de l'appareil de prise de vue ayant servi présente de nombreux intérêts. Dans le cas d'un appareil de prise de vue embarqué sur un engin survolant une zone cartographiée, elle permet de préciser l'attitude et la position du porteur par rapport à la zone cartographiée et par conséquent de recaler sa centrale de navigation. Dans le domaine des beaux-arts, elle permet la correction de certaines distorsions d'une image dues à une prise de vue oblique ou encore de changer le point de vue d'une image.

L'invention a donc pour but la détermination de l'attitude et de la position d'un appareil de prise de vue à partir de l'image qu'il procure d'une zone cartographiée.

Elle a pour objet un procédé de détermination de l'attitude et de la position d'un appareil de prise de vue à partir de l'image qu'il procure d'une zone cartographiée comportant les étapes suivantes :

- adopter pour l'image un système de coordonnées cartésiennes rectangulaires y, z d'origine o quelconque et de directions d'axes oy et oz liés à l'appareil de prise de vue ;
- adopter pour la zone cartographiée un autre système de coordonnées cartésiennes rectangulaires x', y', d'origine O quelconque et de directions d'axes Ox' et Oy' connues ;
- identifier quatre couples au moins de points homologues de l'image et de la carte de la zone imagée ;
- établir pour l'image un système de coordonnées homogènes Y, Z et T au moven de la relation de définition :

$$\begin{cases} Y = yT \\ Z = zT \end{cases}$$

où T est une variable d'homogénéité arbitraire ;
- établir pour la zone cartographiée un système de coordonnées homogènes X', Y' et T' au moyen de la relation de définition :

$$\begin{cases} X' = x'T' \\ Y' = y'T' \end{cases}$$

où T' est une variable d'homogénéité arbitraire ;
- déterminer les coefficients $a_{ij}$ de la matrice A de passage des coordonnées homogènes de l'image à celles de la zone cartographiée :

$$X' = a_{11}Y + a_{12}Z + a_{13}T$$

$$Y' = a_{21}Y + a_{22}Z + a_{23}T$$

$$T' = a_{31}Y + a_{32}Z + a_{33}T$$

en exprimant à l'aide de cette matrice les correspondances entre les coordonnées cartésiennes x'(i), y'(i) et y(i), z(i) des couples de points homologues repérés dans la zone cartographiée et son image ce qui donne le système de 8 équations :

$$a_{11}y(i) - a_{31}y(i)x'(i) + a_{12}z(i) - a_{32}z(i)x'(i) + a_{13} = a_{33}x'(i)$$

$$a_{21}y(i) - a_{31}y(i)y'(i) + a_{22}z(i) - a_{32}z(i)y'(i) + a_{23} = a_{33}y'(i)$$

(i variant de 1 à 4) résolu en donnant à la variable d'homogénéité $a_{33}$ une valeur arbitraire ;

- calculer l'angle de gîte $\Phi$ entre l'axe oy du plan d'image et l'horizontale dans le plan image matérialisée par la droite de section des plans de l'image et de la zone cartographiée, par la relation :

$$\Phi = Arctg(\frac{a_{31}}{a_{32}})$$

et

- calculer l'angle de cap $\Psi$ entre la projection de la direction du plan de l'image sur la zone cartographiée et l'axe de coordonnées OX de la zone cartographiée, par la relation :

$$\Psi = Arctg\frac{a_{12}a_{31} - a_{11}a_{32}}{a_{21}a_{32} - a_{22}a_{31}}$$

L'invention a également pour objet une variante du procédé précédent consistant à utiliser la matrice B de passage des coordonnées homogènes de la zone cartographiée à celles de l'image au lieu de la matrice A de passage des coordonnées homogènes de l'image à celles de la zone cartographiée, ces deux matrices A et B étant inverses l'une de l'autre ; on obtient alors les angle de cap $\Psi$ et de gite $\Phi$ dans l'ordre inverse avec des relations analogues.

Si l'on connaît la distance focale f de l'appareil de prise de vue, le procédé précédent peut être avantageusement complété, pour trouver l'angle d'assiette longitudinale $\Theta$ de l'appareil de prise de vue par rapport au plan de la zone cartographiée et sa distance $\rho$ par rapport au point $\Omega$ de la zone cartographiée correspondant au centre $\omega$ de l'image , par les étapes suivantes :

- déterminer les coordonnées homogènes [Y(m), Z(m), T(m)] dans l'image du point m de l'image ayant pour homologue le point M de la zone cartographiée à l'infini sur l'axe de cap dont les coordonnées homogènes [X'(M), Y'(M), T'(M)] vérifient les relations :

$$X'(M) = \cos\Psi, \ Y'(M) = \sin\Psi \ et \ T'(M) = 0$$

par application de la transformation :

$$A[Y(m), Z(m), T(m)]^T = [X'(M), Y'(M), T'(M)]^T$$

- déduire, des coordonnées homogènes dans l'image du point m sur l'axe de cap, ses coordonnées cartésiennes y(m) et z(m) tirées des relations :

$$\begin{cases} y(m) = \dfrac{Y(m)}{T(m)} \\[2mm] z(m) = \dfrac{Z(m)}{T(m)} \end{cases}$$

- calculer dans le système de coordonnées cartésiennes oyz de l'image, la distance r du centre $\omega$ de l'image au point m comptée en positif si le centre $\omega$ est en dessous du point m et en négatif autrement ;

- déduire l'angle d'assiette longitudinale $\Theta$, opposé de l'angle de piqué, de la relation :

$$\Theta = - Arctg\left(\frac{r}{f}\right)$$

- prendre dans l'image, deux points quelconques sur l'axe horizontal passant par le centre ω de l'image et évaluer leur distance d dans le système de coordonnées cartésiennes oyz ainsi que celle D de leurs points homologues dans la zone cartographiée dans le système de coordonnées cartésiennes Ox'y' ; et

- déterminer la distance ρ de l'appareil de prise de vue au point Ω dans la zone cartographiée homologue du centre ω de l'image à partir de la relation :

$$\rho = f\frac{D}{d}$$

Si l'on ne connaît pas la distance focale de l'appareil de prise de vue, le procédé précédent de détermination des angles de gîte Φ et de cap Ψ peut être avantageusement complété, pour trouver l'angle d'assiette longitudinale Θ de l'appareil de prise de vue par rapport au plan de la zone cartographiée et sa distance ρ par rapport au point Ω de la zone cartographiée correspondant au centre ω de l'image, par les étapes suivantes :

- choisir sur l'image deux couples de points (m,n) et (m',n') :

  • n, respectivement n', étant sur l'axe horizontal passant par le centre ω de l'image ;
  • m, respectivement m', étant sur la perpendiculaire à l'axe horizontal passant par le centre ω de l'image et respectant les relations de distance :

$$|\omega m| = |\omega n| \ \ et \ |\omega m'| = |\omega n'|$$

- déterminer dans la zone cartographiée, les coordonnées homogènes des points Ω, M, M', N et N' homologues des cinq points ω, m, m', n, n' de l'image à application de la transformation :

$$[X', Y', T]^T = A\,[Y, Z, T]^T$$

- trouver les coordonnées cartésiennes des points Ω, M, M', N, N' de la zone cartographiée homologues des points ω, m, m', n, n' de l'image par application des relations :

$$x' = \frac{X'}{T}\ \ et\ y' = \frac{Y'}{T}$$

- en déduire les mesures des distances ΩM, ΩM', ΩN, ΩN' ;
- résoudre le système d'équations :

$$\left|\frac{\sin\Theta}{\Omega N}\right| = \frac{1}{|\Omega M|} + Sign\,(\Omega M)\frac{\cos\Theta}{\rho}$$

$$\left|\frac{\sin\Theta}{\Omega N'}\right| = \frac{1}{|\Omega M|} + Sign\,(\Omega M')\frac{\cos\Theta}{\rho}$$

(ΩM et ΩM' étant comptés positivement vers l'avant) pour en tirer l'angle d'assiette longitudinale Θ de l'appareil de prise de vue et sa distance ρ par rapport au point Ω de la zone cartographiée correspondant au centre ω de l'image.

D'autres caractéristiques et avantages de l'invention ressortiront de la description ci-après d'un mode de mise en oeuvre donné à titre d'exemple. Cette description sera faite en regard du dessin dans lequel :

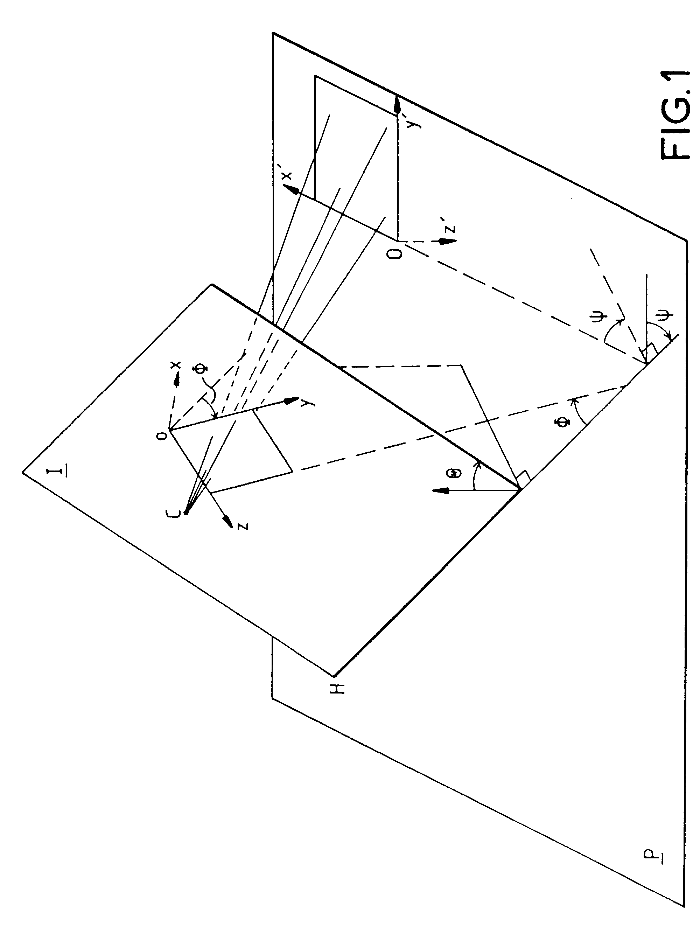

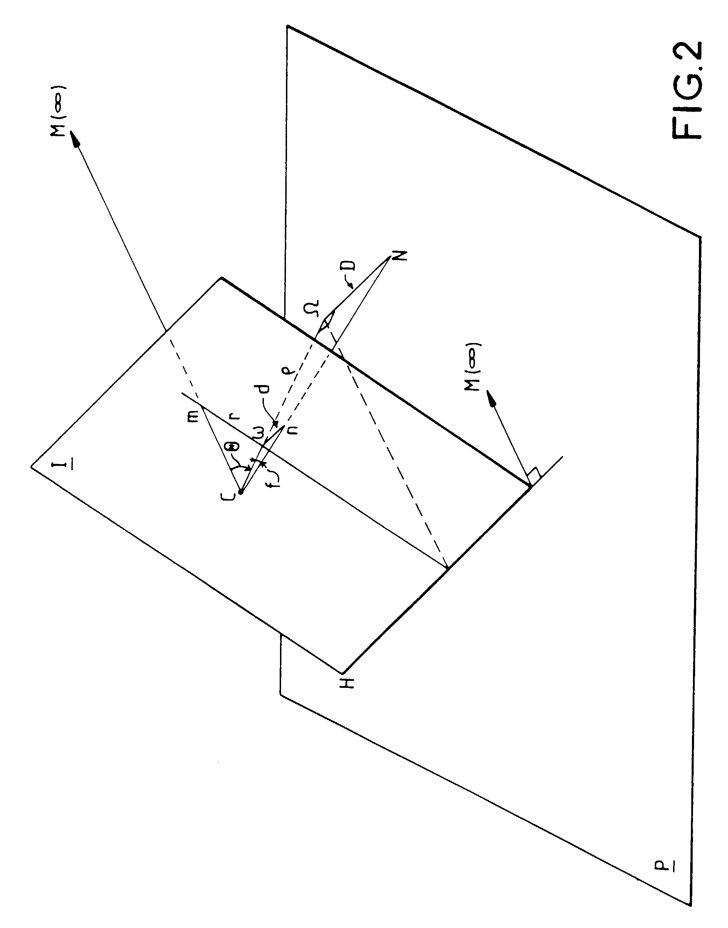

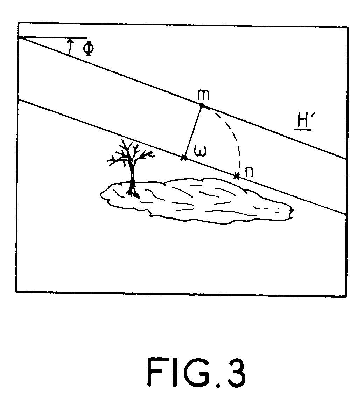

- des figures 1 et 2 sont des schémas en perspective d'une situation de prise d'une vue d'une zone cartographiée illustrant différents éléments pris en compte lors de la mise en oeuvre du procédé selon l'invention pour déterminer l'attitude et la position de l'appareil de prise de vue à partir de l'image obtenue rapportée à une carte ; et
- une figure 3 donne un exemple d'une image dans laquelle sont repérés différents points particuliers utilisés lors de la mise en oeuvre du procédé selon l'invention.

Le procédé qui va être décrit permet de déterminer comment une image a été prise par mise en correspondance de l'image avec une cartographie de la zone qu'elle représente. Il fait appel à des notions de géométrie projective dont on rappelle ici quelques propriétés utilisées dans la suite.

La géométrie projective s'intéresse aux propriétés non métriques des figures (par exemples : trois points donnés sont alignés ou non, trois droites sont concourantes ou non, etc.) qui sont conservées par projections et sections successives. Par exemple, l'ensemble des point d'un plan P vu d'un même point de vue V extérieur au plan P définit une gerbe de droites reliant chacun des points du plan P au point de vue extérieur V. La section de cette gerbe par un autre plan P1 ne passant pas par V établit une correspondance biunivoque (ici, une perspective) entre les points du plan P et ceux du plan P1. On peut ensuite projeter le plan P1 sur un autre plan P2 à partir d'un autre point de vue V2 etc..

Rappelons que l'on peut réaliser une division harmonique par construction géométrique sans faire appel à des mesures de segments. Pour ce faire, il suffit de tracer les trois diagonales d'un quadrilatère complet car chaque diagonale est divisée harmoniquement par les deux autres. Pour mémoire, on rappelle qu'un quadrilatère complet est la figure plane formée par quatre droites ne passant pas trois à trois par un même point. Les droites constituent les côtés du quadrilatère complet et leurs six points de rencontre les sommets du quadrilatère complet. Les sommets non situés sur un même côté sont dits opposés. Il y en a trois couples et les trois droites qui joignent deux sommets opposés sont appelées diagonales.

Une échelle projective sur une droite Δ se définit à partir de la notion de division harmonique de la manière suivante :

- On se donne trois points : un point origine O, un point unité U dont l'abscisse est un définissant une première graduation et un point limite L.
- On place un point D d'abscisse deux définissant une deuxième graduation à partir du conjugué harmonique de O par rapport à U et L.
- On place un point T d'abscisse trois définissant une troisième graduation à partir du conjugué harmonique de U par rapport à D et L.
- On place un point Q d'abscisse quatre définissant une quatrième graduation à partir du conjugué harmonique de D par rapport à T et L.
- etc...

On réalise ainsi de proche en proche une échelle de mesure dite projective sur la droite Δ. Naturellement, l'abscisse du point limite L vaut +∞. L'échelle que l'on vient de construire est une échelle entière mais il est possible de la fractionner à l'infini en prenant le conjugué harmonique du point limite L par rapport aux extrémités du sous-segment à partager.

On définit de même, en géométrie projective un système de coordonnées dans un plan en choisissant, en plus de l'axe Δ, un second axe Δ' de même origine O sur lequel on choisit un point unité U' et un point limite L'. Les coordonnées m et m' d'un point M du plan passant par les deux axes Δ et Δ' sont obtenues en projetant le point M sur l'axe Δ à partir du point limite L' et sur l'axe Δ' à partir du point limite L.

On obtient ainsi une métrique sur une droite, dans un plan ou dans l'espace sans faire appel à la notion de longueur au sens de l'égalité des segments superposables par déplacement.

Les coordonnées cartésiennes rectangulaires habituelles sont un cas particulier d'un tel système dans lequel les axes Δ et Δ' sont perpendiculaires, les points limite L et L' rejetés à l'infini et les segments unité OU et OU' égaux.

Les coordonnées homogènes consistent à associer à l'abscisse x d'un point sur une droite un système de coordonnées X, T défini à une constante multiplicative près tel que : $x = X/T$. Cette opération peut être généralisée à un plan. Elle consiste alors à associer aux coordonnées x, y d'un point du plan un système de coordonnées X, Y, T tel que : $x = X/T$ et $y = Y/T$.

Dans le cas des coordonnées cartésiennes, pour les points situés à l'infini, la coordonnée T vaut zéro. Cette propriété sera utilisée dans la suite.

Deux plans distincts ou confondus, munis chacun d'un système de coordonnées projectives peuvent être mis en correspondance perpective au prix d'un déplacement de l'un d'entre eux. Dans cette correspondance, les coordonnées [X, Y, T] d'un point dans un plan sont des fonctions linéaires des coordonnées homogènes [X', Y', T'] de l'homologue du point dans l'autre plan car il existe une relation matricielle de changement de coordonnées de la forme :

$$\begin{bmatrix} X' \\ Y' \\ T' \end{bmatrix} = \begin{bmatrix} a_{11} & a_{12} & a_{13} \\ a_{21} & a_{22} & a_{23} \\ a_{31} & a_{32} & a_{33} \end{bmatrix} * \begin{bmatrix} X \\ Y \\ T \end{bmatrix}$$

La correspondance, établie par une perspective, entre les coordonnées homogènes de deux points homologues de deux plans est ainsi définies par une matrice 3x3, c'est-à-dire par 9 coefficients dont 8 seulement sont indépendants, le neuvième pouvant être choisi arbitrairement. La connaissance des coordonnées cartésiennes ordinaires $x(1)=X(1)/T(1)$, $y(1)= Y(1)/T(1)$ d'un point d'un plan et des coordonnées cartésiennes ordinaires $x'(1)=X'(1)/T'(1)$ et $y'(1)= Y'(1)/T'(1)$ du point homologue dans l'autre plan permet d'établir deux relations entre les coefficients $a_{ij}$ de la relation matricielle de changement de coordonnées :

$$x'(1) = \frac{X'(1)}{T(1)} = \frac{a_{11}X(1)+a_{12}Y(1)+a_{13}T(1)}{a_{31}X(1)+a_{32}Y(1)+a_{33}T(1)}$$

$$y'(1) = \frac{Y'(1)}{T(1)} = \frac{a_{21}X(1)+a_{22}Y(1)+a_{23}T(1)}{a_{31}X(1)+a_{32}Y(1)+a_{33}T(1)}$$

qui s'écrivent encore :

$$a_{11}x(1) - a_{31}x(1)x'(1) + a_{12}y(1) - a_{32}y(1)x'(1) + a_{13} = a_{33}x'(1)$$

$$a_{21}x(1) - a_{31}x(1)y'(1) + a_{22}y(1) - a_{32}y(1)y'(1) + a_{23} = a_{33}y'(1)$$

Ces relations peuvent être utilisées pour construire un système de 8 équations à 8 inconnues permettant de déterminer les coefficients $a_{ij}$ de la relation matricielle de changement de coordonnées. Il suffit pour cela de disposer d'au moins quatre couples de points homologues formant les sommets d'un vrai quadrilatère.

Ces rappels de géométrie projective étant faits, on se propose de rechercher l'attitude et la position d'un appareil de prise de vue ayant fourni une image d'une zone cartographiée alors que l'on ne dispose que de l'image et d'une carte de la zone.

La carte est supposée munie d'un système de coordonnées cartésiennes rectangulaires ou pouvant être localement considérées comme telles : coordonnées Lambert (kilométriques selon deux axes orthogonaux), voire géographiques (échelles différentes mais de correction facile en longitude) ou même liées à une direction donnée (axe d'une piste, d'une route...).

L'image est plane et sans distorsion (objectif orthoscopique satisfaisant à la condition d'Airy), une droite de l'espace ayant pour image une droite. Si l'on connaît les caractéristiques de l'objectif de l'appareil de prise de vue, on peut également imaginer pouvoir corriger les distorsions en coussin, en tonneau, etc. par un traitement préalable.

On appellera "axe de prise de vue" la droite qui projette orthogonalement le centre optique de l'objectif sur le plan de l'image. Ce n'est pas nécessairement l'axe optique de l'objectif de l'appareil de prise de vue (chambre munie de bascules). On en connaît au minimum la direction. Nous appellerons "centre de l'image" la projection elle-même. Dans le meilleur des cas, il est également connu. Ce n'est pas nécessairement le centre du champ couvert (appareil à décentrement).

On définit un référentiel oxyz lié à l'appareil de prise de vue et suivant les notations de la norme française air NF 02/115, l'axe ox étant orienté vers l'avant de l'appareil de prise de vue, l'axe oy vers la droite de l'appareil de prise de vue et l'axe oz vers le bas de l'appareil de prise de vue. Dans ces conditions, le plan I de l'image est, comme le montre la figure 1, parallèle au plan yoz du référentiel lié à l'appareil de prise de vue.

Le plan P de la carte de la zone imagée est supposé être horizontal et lié à un repère géographique local Ox'y'z', l'axe Ox' étant dirigé vers le nord, l'axe Oy' vers l'est et l'axe vertical Oz' vers le bas.

L'attitude de l'appareil de prise de vue par rapport au plan Ox'y' de la carte de la zone imagée est déterminée par trois rotations effectuées dans cet ordre :

- d'un angle de cap Ψ qui est l'angle que fait avec le nord, la projection sur le plan horizontal Ox'y' de l'axe ox lié à l'appareil de prise de vue. Cette angle Ψ est compris entre 0 et 360°.
- d'un angle d'assiette Θ qui est l'angle que fait l'axe ox avec le plan horizontal ox'y'. Cet angle est compris entre -90° et +90°.
- d'un angle de gîte Φ qui est l'angle que fait l'axe oy avec la droite horizontale du plan oyz. Cet angle est compris entre -180° et +180°.

Comme on peut le voir sur la figure 1, l'angle de gîte Φ est aussi l'angle que fait dans le plan image I l'axe oy avec la trace H du plan image I sur le plan P de la carte tandis que l'angle de cap Ψ est l'angle que fait la normale la trace H du plan image I dans le plan P de la carte par rapport au nord puisque l'axe ox est perpendiculaire au plan image I.

La prise de vue définit une perspective entre le sol et son image. A chaque point de la zone imagée du sol de coordonnées cartésiennes x',y' correspond un point de l'image de coordonnées cartésiennes y, z. Soient X', Y' et T' des coordonnées homogènes de la zone imagée du sol et Y, Z et T des coordonnées homogènes de l'image. Ces coordonnées homogènes sont, comme on l'a vu précédemment à l'occasion des rappels de géométrie projective, liées par une relation matricielle de la forme :

$$\begin{bmatrix} X' \\ Y' \\ T' \end{bmatrix} = \begin{bmatrix} a_{11} & a_{12} & a_{13} \\ a_{21} & a_{22} & a_{23} \\ a_{31} & a_{32} & a_{33} \end{bmatrix} * \begin{bmatrix} Y \\ Z \\ T \end{bmatrix}$$

En prenant pour simplifier une constante d'homogénéité T dans le plan image I égale 1, on peut remplacer les coordonnées homogènes Y et Z par les coordonnées cartésiennes y et z. Il vient alors :

$$\begin{bmatrix} X' \\ Y' \\ T' \end{bmatrix} = \begin{bmatrix} a_{11} & a_{12} & a_{13} \\ a_{21} & a_{22} & a_{23} \\ a_{31} & a_{32} & a_{33} \end{bmatrix} * \begin{bmatrix} y \\ z \\ 1 \end{bmatrix}$$

Comme la variable d'homogénéité $a_{33}$ peut être prise arbitrairement égale à 1, le changement de système de coordonnées homogènes permettant de passer du plan image I au plan P de la carte est défini par huit coefficients $a_{ij}$. Pour déterminer ces huit coefficients, on utilise des couples de points homologues dans le plan image I et dans le plan P de la zone imagée. Soit i l'un de ces couples de points homologues avec pour le point dans le plan image I des coordonnées cartésiennes y(i) et z(i) et pour le point homologue lui correspondant dans le plan P de la carte des coordonnées cartésiennes x'(i) et y'(i). Ces deux systèmes de coordonnées cartésiennes sont liés par la relation matricielle de changement de coordonnées homogènes précédente de sorte que l'on doit avoir :

$$x'(i)\,T = a_{11}y(i) + a_{12}z(i) + a_{13}$$

$$y'(i)\,T = a_{21}y(i) + a_{22}z(i) + a_{23}$$

$$T = a_{31}y(i) + a_{32}z(i) + a_{33}$$

ce qui donne les deux équations :

$$a_{11}y(i) - a_{31}y(i)x'(i) + a_{12}z(i) - a_{32}z(i)x'(i) + a_{13} = a_{33}x'(i)$$

$$a_{21}y(i) - a_{31}y(i)y'(i) + a_{22}z(i) - a_{32}z(i)y'(i) + a_{23} = a_{33}y'(i)$$

Avec quatre couples de points homologues (i variant de 1 à 4) correspondant dans le plan image aux sommets d'un vrai quadrilatère, on obtient un système de 8 équations indépendantes ayant pour inconnues 8 coefficients $a_{ij}$ de la relation matricielle de changement de coordonnées homogènes, le neuvième étant fixé arbitrairement. Il suffit alors de résoudre ce système pour connaître la relation matricielle de changement de coordonnées homogènes et donc de changement de coordonnées cartésiennes.

Un point particulier du plan image I étant repéré par ses coordonnées cartésiennes y, z, il suffit de multiplier le vecteur $[y, z, 1]^T$ par la matrice $\{a_{ij}\}$ obtenue pour connaître les coordonnées homogènes X', Y' et T' du point lui correspondant dans le plan P de la carte, puis déduire de ces coordonnées homogènes les coordonnées cartésiennes de ce même point. En particulier, on peut localiser sur le plan P de la carte les coordonnées de la trace $\Omega$ de l'axe de prise de vue qui est la projection du centre $\omega$ de l'image. Ce point $\Omega$ servira ultérieurement de centre de coordonnées pour localiser l'appareil de prise de vue.

On remarque que l'on n'exploite pas jusqu'ici le fait que les coordonnées sont cartésiennes "usuelles". Tout système de coordonnées projectives planes convient, tant pour l'image que pour la carte. Par exemple, si les cercles iso-distance et les coniques iso-Doppler d'un radar peuvent être assimilés localement à des droites dans un petit domaine, l'image étant assimilée à la mémoire numérique du radar, ces calculs permettent de traiter les coordonnées relatives des points intéressants.

Après avoir déterminé les coefficients $a_{ij}$ de la matrice de changement de coordonnées homogènes permettant de passer du système de coordonnées de l'image à celui de la carte, on peut procéder à la détermination de l'attitude et de la position de l'appareil de prise de vue ayant fourni l'image.

Pour ce faire, on commence par déterminer l'angle de gîte $\Phi$ de l'appareil de prise de vue en remarquant que si la visée lors de la prise de vue n'était pas verticale, le plan de l'image I et celui P de la zone cartographiée supposé horizontal se coupent selon une droite H à distance finie et que cette droite H est la seule du plan P de la carte dont le point à l'infini a son image à l'infini.

On applique alors la relation matricielle de changement de coordonnées homogènes aux coordonnées homogènes $X_1'$, $Y_1'$, $T_1'$ d'un point du plan P de la carte à ceux $Y_1$, $Z_1$, $T_1$ de son point homologue dans le plan I de l'image :

$$X_1' = a_{11}Y_1 + a_{12}Z_1 + a_{13}T_1$$

$$Y_1' = a_{21}Y_1 + a_{22}Z_1 + a_{23}T_1$$

$$T_1' = a_{31}Y_1 + a_{32}Z_1 + a_{33}T_1$$

En considérant plus spécialement le point à l'infini dans le plan I de l'image ($T_1 = 0$) se projetant à l'infini ($T_1' = 0$) dans le plan P de la carte, la troisième relation de ce système s'écrit :

$$a_{31}Y_1 + a_{32}Z_1 = 0$$

Cela définit une direction unique dans le plan I de l'image qui est celle de l'horizontale H. Cette direction repérée dans le système de coordonnées de l'image définit l'angle de gîte $\Phi$ de l'appareil de prise de vue :

$$tg\Phi = -\frac{Z_1}{Y_1} = \frac{a_{31}}{a_{32}} \quad \text{d'où} \quad \Phi = Arctg\left(\frac{a_{31}}{a_{32}}\right)$$

En reportant $Y_1$, $Z_1$, et $T_1 = 0$ dans les deux premières équations, on en déduit la direction homologue dans le plan P de la carte :

$$X'_1 = Y'_1 \frac{a_{11}a_{32} - a_{12}a_{31}}{a_{21}a_{32} - a_{22}a_{31}}$$

L'angle de cap $\Psi$ de l'appareil de prise de vue étant la direction perpendiculaire dans le plan P de la carte, sa tangente vaut :

$$tg\Psi = -\frac{X'_1}{Y'_1} = \frac{a_{12}a_{31} - a_{11}a_{32}}{a_{21}a_{32} - a_{22}a_{31}} \quad \text{d'où} \quad \Psi = Arctg\left(\frac{a_{12}a_{31} - a_{11}a_{32}}{a_{21}a_{32} - a_{22}a_{31}}\right)$$

On prendra garde au fait que les angles de gîte $\Phi$ et de cap $\Psi$ sont définis à $2\pi$ près et requièrent une définition particulière de la fonction Arctg(.) usuellement définie à $\pi$ près.

En variante, on peut, pour la détermination des angles de gîte $\Phi$ et de cap $\Psi$ de l'appareil de prise de vue, utiliser la relation matricielle de passage des coordonnées homogènes du plan P de la carte aux coordonnées homogènes du plan I de l'image au lieu de la relation matricielle de passage des coordonnées homogènes du plan I de l'image aux coordonnées homogènes du plan P de la carte. La relation matricielle de passage des coordonnées homogènes du plan P de la carte au coordonnées homogènes du plan i de l'image peut s'écrire :

$$\begin{bmatrix} Y \\ Z \\ T \end{bmatrix} = \begin{bmatrix} b_{11} & b_{12} & b_{13} \\ b_{21} & b_{22} & b_{23} \\ b_{31} & b_{32} & b_{33} \end{bmatrix} * \begin{bmatrix} X' \\ Y' \\ T' \end{bmatrix}$$

les coefficients $b_{ij}$ constituant une matrice B qui est la matrice inverse de la matrice A formée par les coefficients $a_{ij}$ de la relation matricielle de passage des coordonnées homogènes du plan I de l'image au plan P de la carte.

Les coefficients $b_{ij}$ se déterminent, comme précédemment en appliquant la relation de changement de coordonnées homogènes à quatre couples de points homologues disposés dans chaque plan aux sommets d'un vrai quadrilatère. En reprenant les notations précédentes de leurs coordonnées cartésiennes : y(i), z(i) dans le plan I de l'image et x'(i) et y'(i) dans le plan P de la carte et en adoptant une constante d'homogénéité T' dans le plan P de la carte égale à un, cela permet d'obtenir un système de 8 équations indépendantes à 8 inconnues en $b_{ij}$ :

$$b_{11}x'(i) - b_{31}x'(i)y(i) + b_{12}y'(i) - b_{32}y'(i)y(i) + b_{13} = b_{33}x(i)$$

$$b_{21}x'(i) - b_{31}x'(i)z(i) + b_{22}y'(i) - b_{32}y'(i)z(i) + b_{23} = b_{33}y'(i)$$

que l'on résout pour obtenir les coefficients $b_{ij}$, en fixant arbitrairement la valeur de la variable d'homogénéité $b_{33}$.

Une fois les coefficients de la matrice B de changement de coordonnées homogènes obtenus, on procède comme précédemment en appliquant la relation de changement de coordonnées homogènes aux coordonnées homogènes $X_1'$, $Y_1'$, $T_1'$ d'un point du plan P de la carte à ceux $X_1$, $Y_1$, $T_1$ de son point homologue dans le plan I de l'image :

$$Y_1 = b_{11}X_1' + b_{12}Y_1' + b_{13}T_1'$$

$$Z_1 = b_{21}X_1' + b_{22}Y_1' + b_{23}T_1'$$

$$T_1 = b_{31}X_1' + b_{32}Y_1' + b_{33}T_1'$$

et en s'intéressant au point à l'infini dans le plan I de l'image ($T_1$=0) se projetant à l'infini ($T_1'$=0) dans le plan P de la carte. La troisième relation du système s'écrit :

$$b_{31}X'_1 + b_{32}Y_1' = 0$$

Elle définit dans le plan P de la carte une direction qui est celle de l'intersection du plan P de la carte avec le plan I de l'image. Le cap de l'appareil de prise de vue est perpendiculaire à cette direction de sorte que l'angle de cap $\Psi$ est donné par la relation :

$$tg\left(\Psi - \frac{\pi}{2}\right) = \frac{Y'_1}{X'_1} = -\frac{b_{31}}{b_{32}} \quad d'où \quad \Psi = Arctg\left(\frac{b_{32}}{b_{31}}\right)$$

En reportant la troisième relation dans les deux premières, on obtient une relation entre $Y_1$ et $Z_1$ exprimant la direction de l'horizontale dans le plan I de l'image :

$$Z_1(b_{11}b_{32} - b_{12}b_{31}) = Y_1(b_{21}b_{32} - b_{22}b_{31})$$

par laquelle on repère l'angle de gîte $\Phi$ de l'appareil de prise de vue :

$$tg\Phi = -\frac{Z_1}{Y_1} = \frac{b_{22}b_{31} - b_{21}b_{32}}{b_{11}b_{32} - b_{12}b_{31}} \quad d'où \quad \Phi = Arctg\left(\frac{-b_{22}b_{31} + b_{21}b_{32}}{-b_{11}b_{32} + b_{12}b_{31}}\right)$$

Connaissant l'axe de cap $\Psi$ de l'appareil de prise de vue, on peut déterminer la position m dans le plan I de l'image du point à l'infini de l'axe de cap. La position M dans le plan P de la carte du point à l'infini de l'axe de cap a pour coordonnées homogènes dans le plan P de la carte :

$$X'_1(M) = \cos\Psi, \quad Y'_1(M) = \sin\Psi \text{ et } T'_1(M) = 0$$

Les coordonnées homogènes Y'(m), Z'(m) et T'(m) de la position m du point homologue dans le plan de l'image s'obtiennent en résolvant soit le système linéaire :

$$A[Y'(m), Z'(m), T'(m)]^T = [\cos\Psi, \sin\Psi, 0]^T$$

A étant la matrice définie par les coefficients $a_{ij}$, soit, ce qui revient au même, en appliquant la relation matricielle :

$$[Y'(m), Z'(m), T'(m)]^T = B[\cos\Psi, \sin\Psi, 0]^T$$

B étant la matrice définie par les coefficients $b_{ij}$.

Une fois la position du point m déterminée dans l'image, on calcule sa distance r au centre $\omega$ de l'image comptée positivement lorsque le centre de l'image est en dessous de la ligne d'horizon H. L'angle d'assiette $\Theta$ est fourni par :

$$tg\Theta = -\frac{r}{f} \quad où \quad \Theta = -Arctg\left(\frac{r}{f}\right)$$

f étant la distance focale de l'appareil de prise de vue, cela parce que l'on admet que la scène imagée est à une distance très grande par rapportà la distance focale de l'appareil de prise de vue.

Pour la détermination de la distance ρ de l'appareil de prise de vue par rapport à la projection Ω du centre ω de l'image sur le plan P de la carte, on prend deux points quelconques de l'axe horizontal de l'image connu par l'angle de gîte Θ et l'on calcule leur distance d dans le plan I de l'image ainsi que la distance D de leurs points homologues dans le plan P de la carte. La distance ρ est alors donnée par la relation :

$$\rho = f\,\frac{D}{d}$$

La position de l'appareil de prise de vue par rapport à la projection Ω du centre ω de l'image sur le plan P de la carte est alors entièrement déterminée par les coordonnées sphériques ρ, $\Psi + \pi$ et -Θ.

Il peut arriver que l'on dispose d'une image sans connaître la distance focale de l'appareil de prise de vue. Dans ces conditions, on doit se passer de la distance focale f. Pour se faire, on choisit deux points $m_1$ et $n_1$ de l'image situés à la même distance du centre ω de l'image, l'un $m_1$ sur la trace du plan vertical passant par le centre ω de l'image, l'autre $n_1$ sur l'horizontale. Ces points $m_1$ et $n_1$ de l'image sont projetés sur la carte selon des points $M_1$ et $N_1$ qui vérifient la relation

$$\left|\frac{\sin\Theta}{\Omega N_1}\right| = \frac{1}{\left|\Omega M_1\right|} + sign\,(\Omega M_1)\frac{\cos\Theta}{\rho}$$

($\Omega N_1$ étant compté positivement vers l'avant), ce qui donne une équation liant les inconnues Θ et ρ. Un deuxième couple de point $m_2$ et $n_2$ de l'image choisis comme les points $m_1$ et $n_1$ mais distincts permet d'obtenir une deuxième équation liant les inconnues Θ et ρ. Il est alors possible de tirer de ces deux équations les valeurs de l'angle de gîte Θ et de la distance ρ de l'appareil de prise de vue à la projection Ω du centre de l'image sur la carte.

On remarque que si l'un des points $M_1$ ou $M_2$ est rejeté à l'infini, le point $m_1$ ou $m_2$ homologue de l'image est le point m qui a été utilisé précédemment pour déterminer l'angle de gîte Θ lorsque la distance focale est connue. Ses coordonnées étant y et z, celles de n sont -z et y ou leurs opposés , le centre des coordonnées étant le centre de l'image de sorte que la distance ρ est aussi fournie par la relation :

$$\rho = \left|\frac{\Omega N}{tg\Theta}\right|$$

La figure 1 illustre, de manière schématique, les positions relatives du plan I de l'image par rapport au plan P de la carte de la zone imagée ainsi que la projection depuis le point de vue C confondu avec le centre optique de l'appareil de prise de vue à l'origine de l'image. La projection est matérialisée par un faisceau de quatre droites se joignant au point de vue C extérieur au plan P de la carte et au plan I de l'image. Ces quatre droites sont par exemple, celles qui joignent les quatre points du plan I de l'image dont les homologues ont été repérés dans le plan P de la zone cartographiée et qui servent à la détermination des coefficients $a_{ij}$ ou $b_{ij}$ de la matrice de passage des coordonnées homogènes du plan I de l'image au plan P de la zone cartographiée ou inversement. On distingue sur cette figure 1 le système de coordonnées cartésiennes oyz du plan I de image et celui Ox'y' du plan P de la carte. Le système de coordonnées cartésiennes oyz du plan I de l'image est lié à l'appareil de prise de vue, son axe oy étant tourné vers la droite de l'appareil de prise de vue et son axe oz vers le bas de l'appareil de prise de vue. Il est complété par un axe ox tourné vers l'avant de l'appareil de prise de vue. Le système de coordonnées cartésiennes Ox'y' du plan P de la carte qui est supposé être horizontal, est, par exemple, un système de coordonnées cartésiennes géographique local, son axe Ox' étant tourné vers le nord et son axe Oy' vers l'est. Il est complété par un axe Oz' dirigé selon la verticale descendante. Comme on peut le voir, si la visée de l'appareil de prise de vue n'est pas verticale, le plan I de l'image et le plan P de la carte se coupent à une distance finie selon une droite H qui est horizontale puisque dans la carte et dont la direction dans le plan I de l'image donne la direction de l'horizontale. Dans le plan I de l'image, cette droite H fait par rapport à l'axe oy un angle qui est égal à l'angle de gîte Φ de l'appareil de prise de vue. Dans le plan P de la carte, cette droite H est perpendiculaire à l'axe de cap de l'appareil de prise de vue qui est la projection de l'axe ox dans le plan P de la carte. Il en résulte que l'axe Oy' fait avec elle dans le plan P de la carte un angle égal à l'angle de cap $\Psi$ de l'appareil de prise de vue.

La figure 2 illustre, de manière schématique, les positions relatives des point m et n du plan I de l'image utilisés pour la détermination de l'angle d'assiette Θ de l'appareil de prise de vue et de sa distance ρ au point Ω de la carte homologue du centre ω de l'image. On retrouve sur cette figure les plans I de l'image et P de la carte se coupant selon la droite horizontale H et le point de vue C correspondant au centre optique de l'appareil de prise de vue. Du point de vue C part un faisceau de droites de projection dont l'axe de prise de vue qui est une droite $C\omega\Omega$ joignant le centre ω de l'image avec son point homologue Ω sur la carte. Le point m est la trace dans le plan image de la droite menée par le point de vue C parallèlement au plan P de la carte et perpendiculairement à la droite H ;son homologue M sur la carte est rejeté à l'infini. La droite Cm fait avec l'axe de prise de vue CωΩ un angle égal à l'angle d'assiette Θ de l'appareil de prise de vue. La distance Cω représente la distance focale f de l'appareil de prise de vue et la distance ωm est la distance r utilisée pour la détermination de l'angle de gîte Θ. Le point n est placé dans le plan I de l'image sur une horizontale passant par le centre ω de l'image, à une même distance de celui-ci que le point m. La distance on dans le plan I de l'image est la distance d et la distance des points homologues Ω et M dans le plan P de la carte est la distance D qui sont l'une et l'autre utilisées pour la détermination de la position de l'appareil de prise de vue par rapport au point Ω de la carte correspondant au centre ω de l'image.

La figure 3 donne un exemple d'image d'une zone cartographiée avec un centre d'image ω et une ligne d'horizon H' supposée être au-dessus du centre ω de l'image (angle d'assiette Θ négatif, l'appareil de prise de vue vise le sol). La ligne d'horizon H' fait avec l'axe ox de l'image un angle égal à l'angle de gîte Φ. Le point m est la projection orthogonale du centre ω de l'image sur la ligne d'horizon H'. Le point n est situé sur l'horizontale passant par le centre de l'image ω à même distance de celui-ci que le point m. Pour faciliter la compréhension, on a représenté les éléments intéressants dans le champ de l'appareil de prise de vue mais ce n'est pas une nécessité.

On vient de décrire deux variantes d'un procédé de détermination de l'attitude et de la position d'un appareil de prise de vue à partir de l'image qu'il a fourni d'une zone cartographiée et de quatre couples de points identifiés. Il va sans dire que si l'on dispose de plus de quatre couples de points identifiés, le problème est sur déterminé. Dans ce cas, on choisira par exemple la solution des moindres carrés (utilisant la matrice pseudoinverse).

La détermination de l'attitude et de la position d'un appareil de prise de vue à partir de l'image qu'il a fourni d'une zone cartographiée dès que l'on dispose de quatre points coplanaires identifiés a de nombreuses applications. Elle permet de faire un point à partir d'une image et de la simple connaissance d'une carte, et donc de recaler les dérives d'une centrale d'attitude ou d'une centrale inertielle équipant le porteur de l'appareil de prise de vue.

On peut effectuer une poursuite sur un objectif invisible mais de position connue par rapport à un ensemble de quatre points dûment identifiés : navigation de nuit, guidage de missile vers un objectif camouflé, etc.. On peut aussi marquer un site au moyen de quatre balises optiques et effectuer une navigation relative complète dans son voisinage. On peut faire de même avec des radiobalises à condition de convertir au préalable les données angulaires de goniométrie (circulaire, élévation) en coordonnées projectives.

On peut fournir les coordonnées géographiques d'une scène insolite et peu accessible observée par photographie aérienne : des équipes naviguant avec un équipement de navigation par satellites peuvent ainsi se rendre sur les lieux sans hésitation.

Dans le domaine des beaux-arts, on peut restituer sans distorsion la reproduction d'un tableau, d'une façade, etc. après une prise de vue oblique (déconseillée mais parfois inévitable !). On pourra, comme cela se fait souvent "redresser les fuyantes" en se limitant aux verticales (perspectives "Renaissance"). On peut aussi retrouver le point de vue d'une image pour la comparer à une autre prise à une autre date pour archivage ou pour évaluer la progression de travaux ou des modifications.

On peut ainsi imaginer toutes sortes d'applications dans des domaines très variés.

**Revendications**

1. Procédé de détermination de l'attitude et de la position d'un appareil de prise de vue à partir de l'image qu'il procure d'une zone cartographiée caractérisé en ce qu'il comporte les étapes suivantes :

- adopter pour l'image un système de coordonnées cartésiennes rectangulaires y, z d'origine o quelconque et de directions d'axes oy et oz liés à l'appareil de prise de vue ;
- adopter pour la zone cartographiée un autre système de coordonnées cartésiennes rectangulaires x',y', d'origine O quelconque et de directions d'axes Ox' et Oy' connues ;
- identifier quatre couples au moins de points homologues de l'image et de la carte de la zone imagée ;
- établir pour l'image un système de coordonnées homogènes Y, Z et T au moyen de la relation de définition :

$$\begin{cases} Y = yT \\ Z = zT \end{cases}$$

où T est une variable d'homogénéité arbitraire ;
- établir pour la zone cartographiée un système de coordonnées homogènes X', Y' et T' au moyen de la relation

de définition :

$$\begin{cases} X' = x'\,T' \\ Y' = y'\,T' \end{cases}$$

où T' est une variable d'homogénéité arbitraire ;

- déterminer les coefficients $a_{ij}$ de la matrice A de passage des coordonnées homogènes de l'image à celles de la zone cartographiée :

$$X' = a_{11}Y + a_{12}Z + a_{13}T$$

$$Y' = a_{21}Y + a_{22}Z + a_{23}T$$

$$T' = a_{31}Y + a_{32}Z + a_{33}T$$

en exprimant à l'aide de cette matrice les correspondances entre les coordonnées cartésiennes x'(i), y'(i) et y(i), z(i) des couples de points homologues repérés dans la zone cartographiée et son image ce qui donne le système de 8 équations :

$$a_{11}y(i) - a_{31}y(i)x'(i) + a_{12}z(i) - a_{32}z(i)x'(i) + a_{13} = a_{33}x'(i)$$

$$a_{21}y(i) - a_{31}y(i)y'(i) + a_{22}z(i) - a_{32}z(i)y'(i) + a_{23} = a_{33}y'(i)$$

résolu en donnant à la variable d'homogénéité $a_{33}$ une valeur arbitraire ;

- calculer l'angle de gîte $\Phi$ entre l'axe oy du plan d'image et l'horizontale dans le plan image matérialisée par la droite de section des plans de l'image et de la zone cartographiée, par la relation :

$$\Phi = Arctg(\frac{a_{31}}{a_{32}})$$

et

- calculer l'angle de cap $\Psi$ entre la projection de la direction du plan de l'image sur la zone cartographiée et l'axe de coordonnées OX de la zone cartographiée, par la relation :

$$\Psi = Arctg\frac{a_{12}a_{31} - a_{11}a_{32}}{a_{21}a_{32} - a_{22}a_{31}}$$

2. Procédé selon la revendication 1 appliqué dans le cas où l'on connaît la distance focale f de l'appareil de prise de vue, caractérisé en ce qu'il comporte en outre les étapes suivantes :

- déterminer les coordonnées homogènes [X(m), Y(m), T(m)] dans l'image du point m de l'image ayant pour homologue le point M de la zone cartographiée à l'infini sur l'axe de cap dont les coordonnées homogènes [X'(M), Y'(M), T'(M)] vérifient les relations :

$$X'(M) = \cos\Psi, \ Y'(M) = \sin\Psi \ et \ T'(M) = 0$$

par résolution du système linéaire :

$$A[Y(m), Z(m), T(m)]^T = [X'(M), Y'(M), T'(M)]^T$$

- déduire, des coordonnées homogènes dans l'image du point m sur l'axe de cap, ses coordonnées cartésiennes y(m) et z(m) tirées des relations :

$$\begin{cases} y(m) = \dfrac{Y(m)}{T(m)} \\ z(m) = \dfrac{Z(m)}{T(m)} \end{cases}$$

- calculer dans le système de coordonnées cartésiennes oyz de l'image, la distance r du centre ω de l'image au point m à l'infini sur l'axe de cap comptée en positif si le centre ω est en dessous du point M et en négatif autrement ; et
- déduire l'angle d'assiette longitudinale Θ, opposé à l'angle de piqué, de la relation :

$$\Theta = -Arctg\left(\frac{r}{f}\right)$$

3. Procédé selon la revendication 2, caractérisé en ce qu'il comporte en outre les étapes suivantes :

- prendre dans l'image, deux points quelconques sur l'axe horizontal passant par le centre ω de l'image et évaluer leur distance d dans le système de coordonnées cartésiennes oyz ainsi que celle D de leurs points homologues dans la zone cartographiée dans le système de coordonnées cartésiennes Ox'y' ; et
- déterminer la distance ρ de l'appareil de prise de vue au point Ω dans la zone cartographiée homologue du centre ω de l'image à partir de la relation :

$$\rho = f\frac{D}{d}$$

4. Procédé selon la revendication 1, caractérisé en ce qu'il comporte en outre les étapes suivantes :

- choisir sur l'image deux couples de points (m,n) et (m',n') :

  - n, respectivement n', étant sur l'axe horizontal passant par le centre ω de l'image ;
  - m, respectivement m', étant sur la perpendiculaire à l'axe horizontal passant par le centre ω de l'image et respectant les relations de distance :

$$|\omega m| = |\omega n| \ \ et \ |\omega m'| = |\omega n'|$$

- déterminer dans la zone cartographiée, les coordonnées homogènes des points Ω, M, M', N et N' homologues des cinq points ω, m, m', n, n' de l'image à partir de la transformation :

$$[X', Y', T']^T = A[Y, Z, T]^T$$

- trouver les coordonnées cartésiennes des points Ω, M, M', N, N' de la zone cartographiée homologues des points ω, m, m', n, n' de l'image par application des relations :

$$x' = \frac{X'}{T'} \; et \; y' = \frac{Y'}{T'}$$

- en déduire les mesures des distances $\Omega M$, $\Omega M'$, $\Omega N$, $\Omega N'$ ;
- résoudre le système d'équations :

$$\left|\frac{\sin\Theta}{\Omega N}\right| = \frac{1}{|\Omega M|} + Sign\,(\Omega M)\frac{\cos\Theta}{\rho}$$

$$\left|\frac{\sin\Theta}{\Omega N'}\right| = \frac{1}{|\Omega M|} + Sign\,(\Omega M')\frac{\cos\Theta}{\rho}$$

($\Omega M$ et $\Omega M'$ étant comptés positivement vers l'avant) pour en tirer l'angle d'assiette longitudinale $\Theta$ de l'appareil de prise de vue et sa distance $\rho$ par rapport au point $\Omega$ de la zone cartographiée correspondant au centre $\omega$ de l'image.

5. Procédé de détermination de l'attitude et de la position d'un appareil de prise de vue à partir de l'image qu'il procure d'une zone cartographiée caractérisé en ce qu'il comporte les étapes suivantes :

- adopter pour l'image un système de coordonnées cartésiennes rectangulaires y, z d'origine o quelconque et de directions d'axes oy et oz liés à l'appareil de prise de vue ;
- adopter pour la zone cartographiée un autre système de coordonnées cartésiennes rectangulaires x',y', d'origine O quelconque et de directions d'axes Ox' et Oy' connues ;
- identifier quatre couples au moins de points homologues de l'image et de la carte de la zone imagée ;
- établir pour l'image un système de coordonnées homogènes Y, Z et T au moyen de la relation de définition :

$$\begin{cases} Y = yT \\ Z = zT \end{cases}$$

où T est une variable d'homogénéité arbitraire ;
- établir pour la zone cartographiée un système de coordonnées homogènes X', Y' et T' au moyen de la relation de définition :

$$\begin{cases} X' = x'\,T' \\ Y' = y'\,T' \end{cases}$$

où T' est une variable d'homogénéité arbitraire ;
- déterminer les coefficients $b_{ij}$ de la matrice B de passage des coordonnées homogènes de la zone cartographiée à celles de l'image :

$$Y = b_{11}X' + b_{12}Y' + b_{13}T'$$

$$Z = b_{21}X' + b_{22}Y' + b_{23}T'$$

$$T = b_{31}X' + b_{32}Y' + b_{33}T'$$

en exprimant à l'aide de cette matrice les correspondances entre les coordonnées cartésiennes x'(i), y'(i) et y(i), z(i) des couples de points homologues repérés dans la zone cartographiée et son image ce qui donne le système de 8 équations :

$$b_{11}x'(i) - b_{31}x'(i)y(i) + b_{12}y'(i) - b_{32}y'(i)y(i) + b_{13} = b_{33}x(i)$$

$$b_{21}x'(i) - b_{31}x'(i)z(i) + b_{22}y'(i) - b_{32}y'(i)z(i) + b_{23} = b_{33}y(i)$$

résolu en donnant à la variable d'homogénéité $b_{33}$ une valeur arbitraire ;

- calculer l'angle de cap $\Psi$ entre la projection de la direction du plan de l'image sur la zone cartographiée et l'axe de coordonnées OX de la zone cartographiée, par la relation :

$$\Psi = Arctg\left(\frac{b_{32}}{b_{31}}\right)$$

et

- calculer l'angle de gîte $\Phi$ entre l'axe oy du plan d'image et l'horizontale dans le plan image matérialisée par la droite de section des plans de l'image et de la zone cartographiée, par la relation :

$$\Phi = Arctg\left(\frac{-b_{22}b_{31} + b_{21}b_{32}}{-b_{11}b_{32} + b_{12}b_{31}}\right)$$

6. Procédé selon la revendication 5 appliqué dans le cas où l'on connaît la distance focale f de l'appareil de prise de vue, caractérisé en ce qu'il comporte en outre les étapes suivantes :

- déterminer les coordonnées homogènes [X(m), Y(m), T(m)] dans l'image du point m de l'image ayant pour homologue le point M de la zone cartographiée à l'infini sur l'axe de cap dont les coordonnées homogènes [X'(M), Y'(M), T'(M)] vérifient les relations :

$$X'(M) = \cos\Psi, \quad Y'(M) = \sin\Psi \quad et \quad T'(M) = 0$$

par application de la transformation :

$$[Y(m), Z(m), T(m)]^T = B[X'(M), Y'(M), T'(M)]^T$$

- déduire, des coordonnées homogènes dans l'image du point m, ses coordonnées cartésiennes y(m) et z(m) tirées des relations :

$$\begin{cases} y(m) = \dfrac{Y(m)}{T(m)} \\ z(m) = \dfrac{Z(m)}{T(m)} \end{cases}$$

- calculer dans le système de coordonnées cartésiennes oyz de l'image, la distance r du centre $\omega$ de l'image au point m à l'infini sur l'axe de cap comptée en positif si le centre $\omega$ est en dessous du point M et en négatif autrement; et
- déduire l'angle d'assiette longitudinale $\Theta$ de la relation :

$$\Theta = -Arctg\left(\frac{r}{f}\right)$$

7. Procédé selon la revendication 6, caractérisé en ce qu'il comporte en outre les étapes suivantes :

- prendre dans l'image, deux points quelconques sur l'axe horizontal passant par le centre ω de l'image et évaluer leur distance d dans le système de coordonnées cartésiennes oyz ainsi que celle D de leurs points homologues dans la zone cartographiée dans le système de coordonnées cartésiennes Ox'y' ; et
- déterminer la distance ρ de l'appareil de prise de vue au point Ω dans la zone cartographiée homologue du centre ω de l'image à partir de la relation :

$$\rho = f\frac{D}{d}$$

8. Procédé selon la revendication 5, caractérisé en ce qu'il comporte en outre les étapes suivantes :

- choisir sur l'image deux couples de points (m,n) et (m',n') :

  • n, respectivement n', étant sur l'axe horizontal passant par le centre ω de l'image ;
  • m, respectivement m', étant sur la perpendiculaire à l'axe horizontal passant par le centre ω de l'image et respectant les relations de distance :

$$|\omega m| = |\omega n| \ et \ |\omega m'| = |\omega n'|$$

- déterminer dans la zone cartographiée, les coordonnées homogènes des points Ω, M, M', N et N' homologues des cinq points ω, m, m', n, n' de l'image à partir de la transformation :

$$[X', Y', T]^T = B^{-1}[Y, Z, T]^T$$

- trouver les coordonnées cartésiennes des points Ω, M, M', N, N' de la zone cartographiée homologues des points ω, m, m', n, n' de l'image par application des relations :

$$x' = \frac{X'}{T} \ et \ y' = \frac{Y'}{T}$$

- en déduire les mesures des distances ΩM, ΩM', ΩN, ΩN' ;
- résoudre le système d'équations :

$$\left|\frac{\sin\Theta}{\Omega N}\right| = \frac{1}{|\Omega M|} + Sign(\Omega M)\frac{\cos\Theta}{\rho}$$

$$\left|\frac{\sin\Theta}{\Omega N'}\right| = \frac{1}{|\Omega M|} + Sign(\Omega M')\frac{\cos\Theta}{\rho}$$

(ΩM et ΩM' étant comptés positivement vers l'avant) pour en tirer l'angle d'assiette longitudinale Θ de l'appareil de prise de vue et sa distance ρ par rapport au point Ω de la zone cartographiée correspondant au centre ω de l'image.

FIG.1

FIG.2

FIG.3

Office européen
des brevets

**RAPPORT DE RECHERCHE EUROPEENNE**

Numéro de la demande

EP 97 40 2731

## DOCUMENTS CONSIDERES COMME PERTINENTS

| Categorie | Citation du document avec indication, en cas de besoin, des parties pertinentes | Revendication concernée | CLASSEMENT DE LA DEMANDE (Int.Cl.6) |
|---|---|---|---|
| A | EP 0 141 706 A (OFFICE NATIONAL D'ETUDES ET DE RECHERCHES AEROSPATIALES)<br>* abrégé: figure 7 * | 1,5 | G06T7/00 |
| A | EP 0 148 704 A (THOMSON-CSF)<br>* abrégé * | 1,5 | |
| A | CVGIP IMAGE UNDERSTANDING,<br>vol. 54, no. 3, novembre 1991, MA US,<br>pages 368-383, XP000331222<br>* page 368 - page 370, colonne de droite, alinéa III * | 1,5 | |

DOMAINES TECHNIQUES
RECHERCHES (Int.Cl.6)

G06T

Le présent rapport a été établi pour toutes les revendications

| Lieu de la recherche | Date d'achèvement de la recherche | Examinateur |
|---|---|---|
| LA HAYE | 5 février 1998 | Chateau, J-P |